# FASCICULE DE BREVET EUROPEEN

(11) **EP 1 525 567 B1**
(45) Date de publication et mention de la délivrance du brevet: **14.12.2005**
(21) Numéro de dépôt: 03753641.4
(22) Date de dépôt: 11.07.2003
(51) Int. Cl.: G07F 19/00

(54) **PROCEDE POUR UTILISER UN TERMINAL RADIOTELEPHONIQUE COMME TELECOMMANDE DE DISPOSITIFS AUTOMATIQUES FOURNISSANT DES SERVICES PAYANTS**
VERFAHREN ZUR ANWENDUNG EINES RADIOTELEFONISCHEN ENDGERÄTS ALS FERNBEDIENUNG FÜR AUTOMATISCHE EINRICHTUNGEN DIE BEZAHLTE DIENSTE BEREITSTELLEN
METHOD FOR USING A RADIOTELEPHONE TERMINAL AS REMOTE CONTROL FOR AUTOMATIC DEVICES SUPPLYING FEE-PAYING SERVICES

(30) Priorité: 12.07.2002 FR 0208831
(43) Date de publication de la demande: 27.04.2005
(73) Titulaire: Societé Française du Radiotéléphone, 92915 Paris la Défense Cedex (FR)
(72) Inventeur: FOUCHER, Albert, 78000 Versailles (FR)
(74) Mandataire: Debay, Yves
(86) Numéro de dépôt international: PCT/FR2003/002213
(87) Numéro de publication internationale: WO 2004/008401

(56) Documents cités:
- EP-A- 1 096 439
- EP-A- 1 168 257
- EP-A- 1 184 818
- WO-A-01/45058
- WO-A-99/22346
- US-B1- 6 360 141

## Description

La présente invention concerne un procédé permettant à un utilisateur d'utiliser un terminal radiotéléphonique pour télécommander des dispositifs automatiques fournissant des services payants. L'invention est particulièrement utile, par exemple, pour télécommander des distributeurs automatiques de nourriture ou de boissons, ou encore des accès à des parkings ou à des chambres d'hôtel à paiement automatisé.

Les dispositifs automatiques tels que ceux cités ci-dessus fonctionnent en général par paiement en monnaie ou par carte bancaire, et plus récemment avec des cartes contenant un porte-monnaie électronique. Un inconvénient de ces dispositifs à paiement par monnaie est que l'utilisateur est contraint de disposer de monnaie pour répondre à son besoin de consommation ou de service.

Il est connu, dans l'art antérieur, le pilotage de dispositifs automatiques par des terminaux radiotéléphoniques par l'intermédiaire de la voix ou de données transmises par l'intermédiaire d'interfaces graphiques (WAP) ou de texte (SMS). Un inconvénient des pilotages par l'intermédiaire de la voix est que le dialogue n'est pas toujours aisé, puisqu'il est fonction du bruit environnant. Un autre inconvénient des pilotages par l'intermédiaire de la voix est que l'action n'est pas immédiate, puisque l'écoute des messages par le serveur central vocal et l'activation de la commande de pilotage par ledit serveur impliquent un cheminement long dans l'arborescence. Un inconvénient des pilotages par l'intermédiaire des interfaces graphiques est que le dialogue entre un terminal et le serveur central peut être long et difficile, compte tenu, respectivement, du volume de données à transmettre et de la taille actuelle des écrans de terminaux. Un inconvénient des pilotages par l'intermédiaire de texte est que la saisie du message est fastidieuse, puisqu'une seule touche d'un terminal comprend trois lettres à faire défiler pour sélectionner celle désirée. Un autre Inconvénient des pilotages par l'intermédiaire de texte est que la charge du réseau n'est pas négligeable. Un inconvénient supplémentaire, commun aux types précédents de pilotage par un terminal, est le coût de revient important, puisque l'utilisateur du service paye à la fois le service et la communication radiotéléphonique.

Il est ainsi connu, par le document EP 1 096 439, un système de vente automatique, avec paiement électronique, qui permet d'autoriser des utilisateurs ou clients spécifiés à acheter ou acquérir un article désiré propose par une machine de vente automatique sans avoir à payer en espèces. Pour cela, un client utilise son terminal mobile pour appeler un centre de contrôle, la communication radiotéléphonique étant payante. Le client doit en autre réaliser une opération supplémentaire pour fournir des informations nécessaires pour permettre le déroulement de l'achat/acquisition. Les manipulations fastidieuses combinées au paiement de la communication avec la centre de contrôle rendent ce type de système peu attrayant

La présente invention a pour but de supprimer certains Inconvénients de l'art antérieur en proposant un procède pour utiliser un terminal radiotéléphonique comme télécommande de dispositifs automatiques, qui soit rapide et bon marché.

Ce but est atteint par un procédé pour permettre à un utilisateur d'utiliser un terminal radiotéléphonique comme télécommande d'un dispositif automatique fournissant un ou plusieurs services payants, caractérisé en ce qu'il comprend une étape d'appel de l'utilisateur vers un serveur central, par le réseau radiotéléphonique, l'utilisateur composant, à l'aide de son terminal, un numéro de pilotage, une étape d'identification et de mémorisation du numéro de pilotage et du numéro d'identification du terminal dans une mémoire du serveur central, suivie d'une étape pendant laquelle le serveur central raccroche sans avoir décroché, d'une étape d'identification du dispositif au moins à partir du numéro de pilotage, et d'une étape d'étude et de vérification des droits de l'utilisateur, puis, si l'utilisateur est autorisé à utiliser son terminal pour télécommander un dispositif, le procédé comprend également une étape de transmission, par le serveur central au dispositif, d'une commande pour une opération déterminée, et une étape d'exécution de l'opération par le dispositif.

Selon une autre particularité, le numéro de pilotage est indiqué à l'utilisateur voulant utiliser son terminal radiotéléphonique comme télécommande d'un dispositif automatique, oralement par une première interface du dispositif.

Selon une autre particularité, le numéro de pilotage est indiqué à l'utilisateur voulant utiliser son terminal radiotéléphonique comme télécommande d'un dispositif automatique, par un message écrit sur une première interface du dispositif.

Selon une autre particularité, l'étape d'identification du dispositif consiste en la consultation, par le serveur central, d'une table de correspondance entre les numéros de pilotage et les types de dispositifs, chaque dispositif étant identifié de façon univoque par un numéro de pilotage, et d'extraction du type de dispositif de la table de correspondance à partir du numéro de pilotage reçu par le serveur central.

Selon une autre particularité, l'étape d'identification du dispositif consiste en une étape d'interrogation de l'opérateur par le serveur central pour connaître la localisation géographique de l'utilisateur, à savoir une zone couverte définie par la ou les station(s) terrestre(s) de base à proximité de laquelle l'utilisateur et le dispositif se trouvent, suivie d'une étape d'envoi d'un message de l'opérateur au serveur central indiquant la localisation géographique du dispositif, et d'une étape de consultation, par le serveur central, d'une table de correspondance entre les numéros de pilotage, les dispositifs et la localisation géographique des dispositifs, chaque dispositif étant identifié de façon univoque par un numéro de pilotage et une localisation géographique, et d'extraction du type de dispositif de la table de correspondance à partir du numéro de pilotage reçu par le serveur central.

Selon une autre particularité, l'étape d'étude et de vérification des droits de l'utilisateur consiste en la consultation, par le serveur central, d'une liste des utilisateurs inscrits, cette liste comprenant les numéros d'identification, notamment les numéros MSISDN, des utilisateurs autorisés à utiliser leur terminal radiotéléphonique comme télécommande d'un ou plusieurs dispositifs automatiques déterminés, et de comparaison des numéros d'identification et de pilotage reçus avec la liste des utilisateurs inscrits.

Selon une autre particularité, si l'utilisateur n'est pas autorisé à utiliser son terminal radiotéléphonique comme télécommande du dispositif, le serveur central établit une communication radiotéléphonique avec l'utilisateur et lui notifie qu'il n'est pas autorisé à utiliser son terminal radiotéléphonique comme télécommande du dispositif.

Selon une autre particularité, l'étape de transmission par le serveur central au dispositif d'une commande pour une opération déterminée consiste en l'envoi d'un message de commande d'exécution par le serveur central au dispositif, par le réseau radiotéléphonique ou par le réseau filaire, pour commander au dispositif d'exécuter l'opération et en la réception du message de commande d'exécution par un module de communication radiotéléphonique du dispositif.

Selon une autre particularité, le dispositif exécute l'opération grâce à un module de commande.

Selon une autre particularité, si le dispositif propose un seul service, l'exécution de l'opération par le dispositif consiste en ce que le dispositif fournisse à l'utilisateur ledit service.

Selon une autre particularité, si le dispositif propose plusieurs services, un numéro de pilotage différent étant associé à chaque service, l'exécution de l'opération par le dispositif consiste en ce que le dispositif fournisse à l'utilisateur le service associé au numéro de pilotage composé par l'utilisateur.

Selon une autre particularité, si le dispositif propose plusieurs services, un numéro de pilotage unique étant associé au dispositif, l'exécution de l'opération par le dispositif consiste en ce que le dispositif débloque une deuxième interface, tactile, pour que l'utilisateur sélectionne un service, et en ce que le dispositif fournisse le service sélectionné par l'utilisateur.

Selon une autre particularité, si le dispositif a fourni le service désiré à l'utilisateur, l'étape d'exécution de l'opération par le dispositif est suivie d'une étape de mémorisation du service fourni par le dispositif dans une mémoire comprise du dispositif, et d'une étape de facturation du service par l'opérateur radiotéléphonique via le serveur central et le dispositif.

Selon une autre particularité, l'étape de facturation consiste en l'envoi d'un message d'exécution de l'opération réussie du dispositif, via son module de communication, vers le serveur central, le message d'exécution de l'opération réussie comprenant au moins un identifiant du dispositif, le service effectué, le prix du service et l'heure à laquelle le service a été fourni.

Selon une autre particularité, le message d'exécution de l'opération réussie est mémorisé dans la mémoire du serveur central et associé par le serveur central au numéro d'identification du terminal de l'utilisateur, le serveur central envoyant alors à l'opérateur un message de facturation du service à l'utilisateur, le message de facturation comprenant au moins le numéro d'identification du terminal de l'utilisateur et le prix que ce dernier doit payer.

Selon une autre particularité, l'opérateur mémorise le message de facturation dans une mémoire du serveur de l'opérateur.

Selon une autre particularité, si le dispositif n'a pas fourni le service désiré à l'utilisateur, le dispositif utilise sa première interface pour informer l'utilisateur qu'une erreur est survenue, et envoie un message d'erreur au serveur central, le message d'erreur comprenant au moins un identifiant du dispositif, le service qui était désiré, et l'heure à laquelle l'erreur est survenue.

Selon une autre particularité, le serveur central mémorise le message d'erreur dans sa mémoire et envoie un message d'information à l'utilisateur par le réseau radiotéléphonique pour l'informer qu'une erreur est survenue.

D'autres particularités et avantages de la présente invention apparaîtront plus clairement à la lecture de la description ci-après, faite en référence aux dessins annexés, dans lesquels :

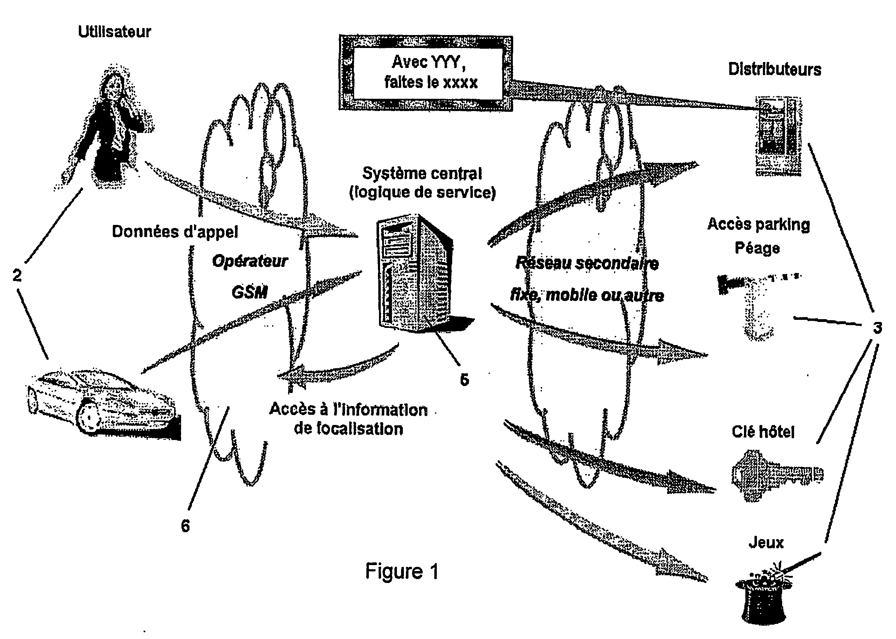

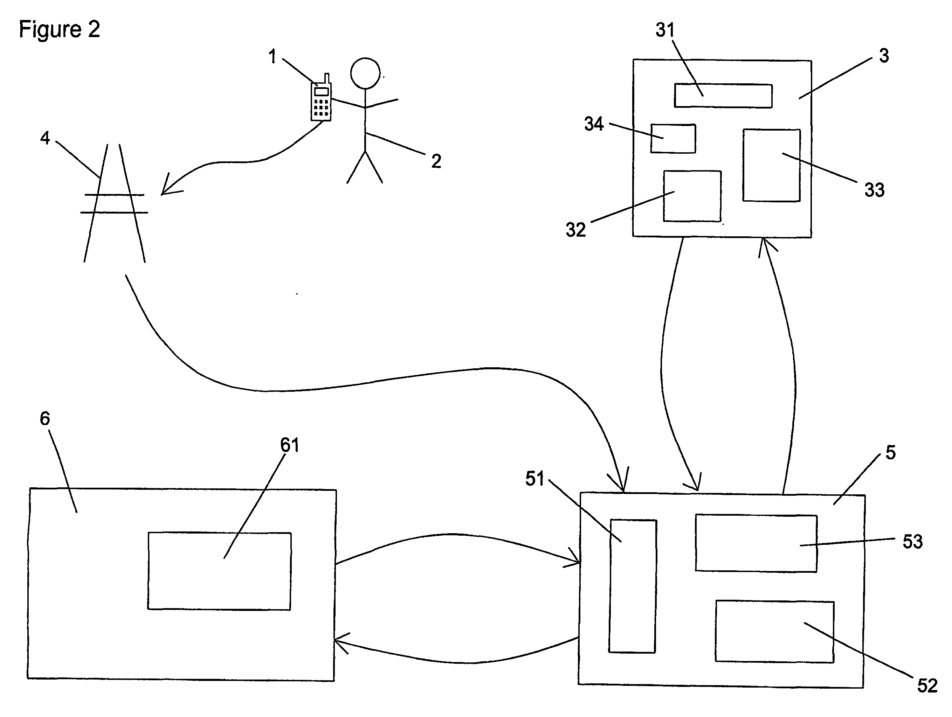

- les figures 1 et 2 représentent un schéma de principe du procédé selon l'invention.

Sur la figure 2, un utilisateur (2) muni d'un terminal (1) radiotéléphonique se trouve devant un dispositif (3) automatique qu'il souhaite télécommander à l'aide son terminal (1). Le dispositif (3) automatique comprend au moins une interface (31) de communication orale ou écrite avec l'utilisateur (2) et un système informatique incluant une mémoire (34). Cette interface (31) affiche ou dit oralement, dans un premier temps, de contacter un serveur central (5) en composant un numéro, dit numéro de pilotage, afin de télécommander le dispositif (3). Par exemple, le message d'accueil communiqué par l'interface (31) d'un distributeur (3) de boissons peut être : "Pour obtenir votre boisson par l'opérateur YYY, composez le xxxx !". Ce numéro de pilotage doit être à la fois le plus court possible pour que l'utilisateur (2) puisse accéder au service désiré le plus rapidement possible, et assez long pour qu'un nombre suffisant de dispositifs (3) automatiques puissent être utilisés grâce au procédé selon l'invention. Le nombre de chiffres composant le numéro de pilotage est, de préférence quatre, mais il peut être compris entre un et dix. La globalisation de l'ensemble permet de réduire significativement, efficacement et avantageusement la taille des numéros de pilotage.

Si le dispositif (3) automatique propose plusieurs services, plusieurs numéros de pilotage peuvent être attribués audit dispositif (3), chaque numéro permettant l'exécution d'un seul des services. Par exemple, pour un distributeur de boissons délivrant plusieurs produits différents, un numéro de pilotage différent est associé à chacun des produits proposés par le distributeur. Dans ce mode de réalisation avec un dispositif proposant plusieurs services, le dispositif (3) comprend une interface (31) par service disponible. Ces différentes interfaces (31) sont indifféremment orales ou écrites si elles deviennent actives après que l'utilisateur (2) ait appuyé sur un bouton correspondant au service choisi, et de préférence écrites si elles sont toutes actives en même temps, pour éviter une confusion.

Pour bénéficier du procédé selon l'invention, l'utilisateur (2) possédant un terminal (1) radiotéléphonique devra s'être préalablement inscrit auprès de l'opérateur téléphonique (6) proposant le procédé selon l'invention.

Lorsque l'utilisateur (2) compose le numéro de pilotage adéquat sur son terminal (1) radiotéléphonique, l'appel est transmis par le réseau radiotéléphonique, par exemple le réseau GSM, vers la station terrestre de base (4) la plus proche dudit terminal (1). L'appel est ensuite transmis par le réseau filaire de la station terrestre de base la plus proche du terminal (1) vers un ou plusieurs serveurs centraux (5). L'opérateur radiotéléphonique (6) gérant le procédé peut répartir géographiquement plusieurs serveurs centraux (5), chaque serveur central (5) ne répondant alors qu'aux appels provenant d'une zone géographique déterminée.

Pour la simplification de la description, la suite du procédé sera décrite en ne considérant qu'un seul serveur central (5). Le serveur central comprend au moins un système informatique incluant une mémoire (53). Lorsque le serveur central (5) reçoit l'appel provenant du terminal (1) dont le propriétaire souhaite télécommander un dispositif (3) automatique, le serveur central (5) enregistre le numéro d'identification du terminal (1), par exemple le numéro MSISDN, et le numéro de pilotage dans sa mémoire (53), et raccroche sans avoir décroché. Ceci permet à l'utilisateur (2) de ne pas payer de communication téléphonique, ce qui fait que le procédé selon l'invention est bon marché en regard des procédés de l'art antérieur décrits plus hauts et, de plus, extrêmement rapide.

Le serveur central (5) comprend également une liste des utilisateurs autorisés à bénéficier du procédé selon l'invention, qui se sont préalablement inscrits auprès de l'opérateur (6). Cette liste, dite liste des utilisateurs inscrits (51), associe le numéro d'identification de chaque utilisateur avec les services auxquels l'utilisateur a souscrit, à savoir les types de dispositifs qu'il souhaite télécommander. Il peut être prévu que certains utilisateurs ne soient inscrits que pour certains types de dispositifs. Le serveur central (5) comprend aussi une table associant les différents numéros de pilotage aux différents dispositifs (3), dite table de correspondance (52). Après que le serveur central (5) ait enregistré le numéro de pilotage et le numéro d'identification du terminal (1), il consulte la table de correspondance (52) pour identifier le dispositif (3) à partir du numéro de pilotage, et la liste des utilisateurs inscrits (51) pour connaître les droit de l'utilisateur à partir du numéro d'identification. Si l'utilisateur (2) n'est pas autorisé à télécommander le dispositif (3) devant lequel il se trouve, le serveur central (5) établit une communication avec le terminal (1) radiotéléphonique de l'utilisateur, puis envoie, par exemple, un message sous forme de texte audit utilisateur ou le contacte oralement, par le réseau radiotéléphonique, pour l'informer qu'il n'est pas autorisé à télécommander ce dispositif (3). Dans une variante de l'invention, le serveur central (5) envoie un message au dispositif (3) pour que ce dernier informe l'utilisateur (2), par l'intermédiaire de son interface (31), qu'il n'est pas autorisé à télécommander ce dispositif. Si, en revanche, l'utilisateur (2) est autorisé à télécommander le dispositif (3) devant lequel il se trouve, le serveur central (5) envoie au dispositif (3) concerné un message, dit message de commande d'exécution, pour que le dispositif (3) exécute l'opération désirée par l'utilisateur (2). Ce message est envoyé par le moyen de communication choisi par l'opérateur : ligne spécialisée, ligne fixe, ligne GSM, GPRS, SMS, R-LAN (type bluetooth ou Wi-fi, notamment 802.11), etc...

Dans une variante de la présente invention mettant en oeuvre une géodépendance du dispositif, la table de correspondance (52) associe également, à chaque paire numéro de pilotage/type de dispositif (3), la localisation géographique de l'utilisateur (2) dans une zone définie. Ceci permet d'avantageusement attribuer le même numéro de pilotage à plusieurs dispositifs situés chacun à proximité d'une zone définie différente. La localisation de l'utilisateur peut être effectuée par le réseau selon différents procédés (station de base, cellule dans la station de base, calcul de position en fonction des ondes reçues par le terminal, etc...). Dans cette variante, le serveur central (5), après avoir enregistré les numéros d'identification et de pilotage dans sa mémoire (53), interroge l'opérateur radiotéléphonique (6) grâce à sa logique de service, pour savoir dans quelle zone se trouve l'utilisateur (2) et dans quelle zone se trouve le dispositif (3). Cette information est disponible grâce à la mise en oeuvre de procédés associés au réseau radiotéléphonique qui fournit ladite information. Le rapprochement des deux informations permet d'exécuter le service demandé. L'opérateur (6) comprend un système informatique qui recherche l'information de localisation géographique dans une mémoire (61) dans laquelle sont enregistrés les appels transitant par les différentes stations terrestres de base (4). L'opérateur (6) transmet alors l'information de localisation géographique au serveur central (5), qui l'enregistre dans sa mémoire (53). Le serveur central (5) consulte alors la table de correspondance (52) pour identifier le dispositif (3) en fonction du numéro de pilotage reçu de l'utilisateur (2) et de la localisation géographique du dispositif reçue de l'opérateur (6). La suite de la procédure, à savoir la vérification des droits de l'utilisateur et l'envoi du message de commande d'exécution du serveur central (5) vers le dispositif (3) concerné, est la même.

Dans une autre variante, le serveur central (5) gère en même temps des dispositifs à numéros de pilotage géodépendants et des dispositifs à numéros de pilotage non géodépendants. Si le serveur central (5) extrait de la table de correspondance (52) plusieurs dispositifs correspondant à un même numéro de pilotage, le serveur central (5) interroge l'opérateur pour avoir accès à la localisation géographique du dispositif (3) comme décrit ci-dessus, puis vérifie les droits de l'utilisateur et envoie le message de commande d'exécution au dispositif. Si le serveur central (5) extrait de la table de correspondance (52) un seul dispositif correspondant à un numéro de pilotage déterminé, le serveur central (5) vérifie les droits de l'utilisateur sans interroger l'opérateur sur la localisation géographique du dispositif, puis envoie le message de commande d'exécution au dispositif. Cette variante permet à un utilisateur de s'affranchir de la distance pour certaines opérations qu'il va pouvoir déclencher indépendamment du lieu où il se trouve, comme, par exemple, la mise en route automatique du chauffage de sa résidence secondaire grâce à son mobile, par exemple deux heures avant qu'il arrive. Toutefois, cette deuxième variante présente un inconvénient qui est la perte de la notion de proximité. En effet, l'utilisateur n'étant pas présent devant le dispositif délivrant le service qu'il souhaite, il ne peut pas vérifier qu'il a composé le bon numéro de pilotage et qu'il n'a pas déclenché par erreur un autre dispositif.

Le dispositif (3) comprend au moins un module de communication (32) communiquant, d'une part, avec un module de commande (33) électronique, et, d'autre part, avec le serveur central (5), soit par le réseau radiotéléphonique, soit par le réseau filaire, et un système informatique incluant une mémoire (34). Si le module de communication (32) communique avec le serveur central par le réseau GSM, le module de communication (32) possède une carte SIM. Le module de communication (32) réceptionne le message de commande d'exécution qu'il reçoit du serveur central et transmet la commande au module de commande (33) qui exécute l'opération. Dans le cas d'un dispositif (3) proposant un seul service, l'exécution de l'opération par le module de commande (33) consiste à fournir à l'utilisateur (2) ledit service. Des exemples de services possibles sont donnés plus bas.

Dans le cas d'un dispositif (3) proposant plusieurs services, si un seul numéro de pilotage est attribué au dispositif (3), l'exécution de l'opération par le module de commande (33) consiste à rendre accessibles à l'utilisateur (2) les différents services disponibles. L'utilisateur (2) choisit alors, par exemple par un système de touches désignant les services disponibles, celui qu'il désire, et le dispositif lui foumit ce service. Si, en revanche, plusieurs numéros de pilotage sont attribués au dispositif (3), chaque numéro de pilotage étant associé à un unique service, l'exécution de l'opération par le module de commande (33) consiste à fournir à l'utilisateur (2) le service correspondant au numéro de pilotage composé.

Immédiatement après que l'utilisateur (2) ait disposé du service désiré, le dispositif (3) envoie au serveur central (5), par le module de communication (32), un message d'exécution d'opération réussie comprenant au moins un identifiant du dispositif (3), le service effectué, le prix du service et l'heure à laquelle a eu lieu l'exécution, ou un message d'erreur si le service n'a pas pu être fourni. Le message d'erreur comprend un identifiant du dispositif (3), le service qui devait être effectué, le signalement d'erreur et l'heure à laquelle l'erreur est survenue. Les messages d'exécution d'opération réussie et les messages d'erreur sont enregistrés dans la mémoire (34) du distributeur (3). Dans une variante de l'invention, le dispositif (3) envoie les messages d'exécution d'opération réussie et les messages d'erreur par paquets de plusieurs messages, après plusieurs exécutions réalisées pour différents utilisateurs (2) qui se sont succédés pour télécommander ledit dispositif (3). Les messages d'exécution réussie ou d'erreur sont envoyés par le réseau filaire ou par le réseau radiotéléphonique, par exemple au moyen d'un "texto" (SMS), ou en mode GPRS.

Le serveur central (5) réceptionne le ou les messages d'exécution réussie et/ou d'erreur et les enregistre dans sa mémoire (53). Le serveur central (5) associe ensuite chaque message reçu au numéro d'identification de l'utilisateur, par exemple grâce à l'heure à laquelle a eu lieu l'exécution ou l'heure à laquelle l'erreur est survenue, ces heures étant seulement légèrement plus tardives que l'heure à laquelle le serveur central (5) a transmis le message de commande d'exécution au dispositif (3). En cas de réussite, le serveur central (5) envoie alors à l'opérateur (6), par le réseau filaire ou radiotéléphonique, un message de facturation. Ce message de facturation n'est envoyé que si l'exécution a lieu. Il comprend le numéro d'identification de l'utilisateur (5) et le prix à facturer.

Dans le cas où une erreur survient et que l'exécution ne peut pas avoir lieu, le dispositif (3) affiche ou dit oralement, par l'intermédiaire de son interface (31), qu'il y a une erreur, et précise quelle est cette erreur (par exemple : "Ce service n'est plus disponible"). Le serveur central (5), après réception d'un message d'erreur de la part du dispositif (3), peut également prévenir l'utilisateur par l'intermédiaire de son terminal (1) en lui envoyant, par exemple, un message sous forme de texte (SMS) ou en le contactant oralement. Dans une variante, il peut aussi prévenir l'exploitant du dispositif (3) pour lui signaler une anomalie.

Notons que l'utilisateur peut être abonné chez un autre opérateur qui a des accords de "roaming" avec l'opérateur (6). Dans ce cas, l'opérateur (6) qui gère le procédé selon l'invention envoie une facturation à l'opérateur chez qui l'utilisateur (2) du procédé a un abonnement et ce, selon les accords de "roaming".

Notons également que le serveur central (5) et l'opérateur (6) communiquent périodiquement pour mettre à jour la liste des utilisateurs inscrits (51) et la table de correspondance (52).

Le procédé selon l'invention peut trouver une application dans une multitude de domaines, dont certains exemples non limitatifs sont listés ci-dessous:
- dans le commerce électronique, pour :
   - l'accès aux parkings publics (ce dispositif est détaillé plus loin),
   - le stationnement payant avec un système d'horodateurs (ce dispositif est détaillé plus loin),
   - les péages,
   - le renouvellement de commandes,
   - le paiement de factures,
   - l'identification et la signature électronique,
   - l'appel d'urgence,
   - le service d'hôtellerie : arrivée, départ, clé de chambre, service en chambre, etc...,
   - la restauration rapide : distributeurs automatiques (ce dispositif est détaillé plus loin).
- dans le contrôle et le "monitoring" à distance, pour :
   - les commandes d'éclairage, de signaux, de parkings,
   - les commandes d'affichages,
   - les sécurités sans fils, les commandes à distance : chauffage, électricité, etc...,
   - la maison intelligente,
   - la surveillance,
   - les alarmes : réservoirs d'eau, de carburant, etc...,
   - la rupture de stock : systèmes automatiques,
   - la gestion de flotte : diagnostics, tracking, etc...,
   - les équipements : irrigation, alimentation, contrôle climatique, etc....
- dans les associations, pour :
   - les sports : pronostics, paris, etc...,
   - les jeux: votes, sélections, etc...,
   - les clubs : inscription, réservation, etc...

Rappelons que, pour fonctionner, le système pour mettre en oeuvre le procédé doit contenir la liste des clients aux services, ces clients pouvant être une partie ou l'ensemble des clients de l'opérateur gérant le procédé, ainsi que des clients externes qui se sont, au préalable, inscrits aux services, cette liste étant indispensable pour identifier les utilisateurs et, le cas échéant, leur imputer les coûts du service. Le système doit également contenir les droits associés à chaque client, un système de numérotation qui identifie le dispositif télécommandé, éventuellement l'accès à la localisation géographique du terminal de l'utilisateur, et un ou plusieurs serveurs centraux.

Les prochains paragraphes détaillent l'application du procédé selon l'invention à l'exemple du distributeur automatique de boissons.

Un consommateur (2) se trouve devant un distributeur automatique de boissons. Le distributeur comprend, à la place du monnayeur classique, une "boîte noire" détaillée plus bas. Le consommateur (2) peut lire sur la façade du distributeur un message l'invitant à utiliser son terminal (1) pour consommer. Le consommateur (2) qui souhaite consommer, compose le numéro de pilotage qui est affiché sur le distributeur. Son appel est automatiquement routé sur le serveur central (5), qui reçoit l'appel, analyse les données d'appel (numéro d'identification de l'utilisateur et numéro de pilotage), mais ne décroche pas.

En reconnaissant le numéro de pilotage composé, le système central (5), grâce à sa logique de service, interroge le réseau radiotéléphonique pour connaître la position géographique du mobile. Avec l'information de localisation, le système central (5) associe, grâce à la table de correspondance (52), le numéro de pilotage composé avec le distributeur (3) situé dans le périmètre à proximité du consommateur (2). Le serveur central (5) vérifie les droits de l'utilisateur dans la liste des utilisateurs inscrits (51).

Le système central (5) envoie une commande vers le distributeur automatique (3) par l'intermédiaire d'un réseau de communication (qui peut être, selon les cas, le réseau fixe, une ligne spécialisée, le réseau GSM, un réseau sans fil, etc...).

La boîte noire du distributeur (3) comprend un module de communication (32), par exemple GSM ou GPRS, avec une carte SIM, qui communique avec d'une part un module de commande (33) électronique et d'autre part le serveur central (5). Le module de communication (32) reçoit une commande d'exécution d'opération de la part du serveur et la transmet au module de commande (33) qui actionne alors un contact déclenchant, selon la solution choisie par l'opérateur, soit le clavier de choix d'articles du distributeur, soit l'article désigné (s'il est unique). L'utilisateur/consommateur (2) peut ainsi consommer une boisson. Cette boisson sera enregistrée dans la mémoire (34) du distributeur (3), et référencée par la commande du système central (5).

Le distributeur (3) communique (soit immédiatement, soit en différé) au système central (5) les éléments de la transaction (machine, produit, prix, etc...) ou, le cas échéant, une anomalie.

Le serveur central (5) enregistre le montant de la transaction et l'associe au numéro d'identification du consommateur (2). Le système central (5) communique à l'opérateur (6) du consommateur (2) le montant de la transaction. Les cas de mauvais fonctionnement sont analysés et traités par système central (5). Le système central (5) est en relation avec le système informatique de l'opérateur (6) pour le report des consommations et, éventuellement, le système informatique du distributeur (3) pour la remontée des éléments de consommation, de gestion des stocks, des anomalies et des mises à jour du distributeur (les modifications de prix par exemple).

Le système central (5) peut prendre en compte une gestion des consommateurs (2) pour des objectifs de fidélisation, d'incitations et de promotions, tant d'un point de vue opérateur que de celui du distributeur.

Les prochains paragraphes détaillent l'application du procédé selon l'invention à l'exemple de l'accès au parking.

L'application du procédé à un accès à un parking fonctionne sur les mêmes principes. L'usager (2) qui souhaite accéder au parking, compose le numéro de pilotage qui est affiché à proximité de la barrière d'accès. L'appel est traité par un système central (5), qui vérifie les droits du consommateur et sa localisation (si cette fonction est mise en oeuvre). Après avoir rapproché la localisation du mobile et la barrière d'accès, le système central (5) retransmet une commande d'ouverture (par une liaison, soit radiotéléphonique, soit filaire). Le système (3) qui pilote la barrière d'accès, vérifie qu'un véhicule est bien présent devant l'accès, par exemple grâce à une boucle de présence dans le sol, et commande l'ouverture de la barrière.

Le droit d'accès de l'usager (2) peut être un droit propre (c'est l'utilisateur habituel qui demande l'accès) ou être délégué (dans ce cas, c'est une personne habituellement autorisée, qui donne le droit d'accès) à un autre usager (par exemple, un visiteur identifié par son numéro d'identification : celui-ci est enregistré, durant une période définie, pour accéder au parking).

Les cas de mauvais fonctionnement sont analysés et traités par le système central (5).

Enfin, le système central (5) peut-être en relation avec un système de facturation et gérer, comme précédemment, l'usager (2) avec un suivi de la consommation et une fidélisation.

Dans un parking d'entreprise, par exemple, chaque utilisateur peut avoir la possibilité de donner le droit d'accès à un visiteur, par exemple pour une demi-journée. Le visiteur doit alors réserver au préalable en téléphonant à l'opérateur (6) ou en lui envoyant un message pour lui préciser la demi-journée souhaitée et le numéro d'identification. Un message est alors adressé au visiteur pour lui spécifier le numéro de la place de parking réservée. Lorsque le visiteur arrive à proximité de la barrière et appelle le numéro de pilotage, il est identifié par le serveur central par son numéro d'identification. L'accès du visiteur au parking est autorisé, soit à la place de l'utilisateur habituel, soit dans un groupe de places réservées aux visiteurs, en fonction des disponibilités.

Les prochains paragraphes détaillent l'application du procédé selon l'invention à l'exemple du stationnement payant.

Pour bénéficier de ce service, l'automobiliste (2) compose le numéro de pilotage indiqué sur une borne d'horodateur (3) au début du stationnement de son véhicule. Le serveur central (5) identifie l'horodateur (3) et vérifie les droits de l'utilisateur, puis :
- soit débloque l'horodateur (3) pour que ce dernier propose à l'automobiliste (2) de choisir une durée de stationnement. Après sélection de la durée par l'automobiliste, l'horodateur édite un ticket que l'automobiliste place derrière la vitre de son véhicule. L'horodateur (3) communique alors au serveur central (5) le prix que doit payer l'automobiliste (2), qui est fonction de la durée de stationnement choisie.
- soit enregistre l'heure de début de stationnement dans une mémoire du serveur central. A la fin de son stationnement, l'automobiliste doit appeler un second numéro de pilotage permettant au serveur central d'enregistrer l'heure de fin de stationnement. Le serveur central comprend une table associant le numéro d'identification et le numéro d'immatriculation ou un code barre apposé sur le véhicule. L'automobiliste doit alors mettre en évidence sur son véhicule qu'il dispose du service de paiement télécommandé. Les contractuelles vérifient la régularité du stationnement grâce à un mobile spécifique qui communique avec le serveur central, et une lecture de code barre apposé sur le véhicule. Un système central (5) contrôle et gère les stationnements.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé pour permettre à un utilisateur (2) d'utiliser un terminal (1) radiotéléphonique comme télécommande d'un dispositif (3) automatique fournissant un ou plusieurs services, **caractérisé en ce qu'**il comprend :
- une étape d'appel de l'utilisateur (2) vers au moins un serveur central (5), par le réseau radiotéléphonique, l'utilisateur (2) composant un numéro de pilotage à l'aide de son terminal (1),
- une étape de réception de l'appel sans décrochage par le ou les serveur(s) central (centraux) (5), utilisant des moyens d'identification et une mémoire (53) du ou des serveur(s) central (centraux) (5) pour respectivement identifier et mémoriser le numéro de pilotage et le numéro d'identification du terminal (1), suivie d'une étape de fin de communication utilisant des moyens de raccrochage sans décrochage permettant au(x) serveur(s) central (centraux) (5) de raccrocher sans avoir décroché.
- une étape d'identification du dispositif (3) au moins à partir du numéro de pilotage.
- une étape d'étude et de vérification des droits de l'utilisateur (2), puis, si l'utilisateur est autorisé à utiliser son terminal (1) pour télécommander un dispositif (3), une étape de transmission, par le ou les serveur(s) central (centraux) (5) au dispositif (3), d'une commande pour une opération déterminée, et d'une étape d'exécution de l'opération par le dispositif (3).

2. Procédé selon la revendication 1, **caractérisé en ce que** le numéro de pilotage est indiqué à l'utilisateur voulant utiliser son terminal (1) radiotéléphonique comme télécommande d'un dispositif (3) automatique, oralement par une première interface (31) du dispositif (3).

3. Procédé selon la revendication 1, **caractérisé en ce que** le numéro de pilotage est indiqué à l'utilisateur voulant utiliser son terminal (1) radiotéléphonique comme télécommande d'un dispositif (3) automatique, par un message écrit sur une première interface (31) du dispositif (3).

4. Procédé selon une des revendications 1 à 3, **caractérisé en ce que** l'étape d'identification du dispositif (3) consiste en la consultation, par un serveur central (5), d'une table de correspondance (52) entre les numéros de pilotage et les types de dispositifs (3), chaque dispositif étant identifié de façon univoque par un numéro de pilotage, et d'extraction du type de dispositif (3) de la table de correspondance (52) à partir du numéro de pilotage reçu par le serveur central (5).

5. Procédé selon une des revendications 1 à 3, **caractérisé en ce que** l'étape d'identification du dispositif (3) consiste en une étape d'interrogation de l'opérateur (6) par un serveur central (5) pour connaître la localisation géographique de l'utilisateur (2), à savoir une zone couverte définie par la ou les station(s) terrestre(s) de base (4) à proximité de laquelle l'utilisateur (2) et le dispositif (3) se trouvent, suivie d'une étape de consultation, par le serveur central (5), d'une table de correspondance (52) entre les numéros de pilotage les dispositifs (3) et la localisation géographique des dispositifs (3), chaque dispositif étant identifié de façon univoque par un numéro de pilotage et une localisation géographique, et d'extraction du type de dispositif (3) de la table de correspondance (52) à partir du numéro de pilotage reçu par le serveur central (5).

6. Procédé selon une des revendications 4 ou 5, **caractérisé en ce que** l'étape d'étude et de vérification des droits de l'utilisateur (2) consiste en la consultation, par le serveur central (5), d'une liste des utilisateurs inscrits (51), cette liste comprenant les numéros d'identification, notamment les numéros des utilisateurs (2) autorisés à utiliser leur terminal (1) radiotéléphonique comme télécommande d'un ou plusieurs dispositifs (3) automatiques déterminés, et de comparaison des numéros d'identification et de pilotage reçus avec la liste des utilisateurs Inscrits.

7. Procédé selon la revendication 6, **caractérisé en ce que**, si l'utilisateur n'est pas autorisé à utiliser son terminal (1) radiotéléphonique comme télécommande du dispositif (3), un serveur central (5) établit une communication radiotéléphonique avec l'utilisateur (2) et lui notifie qu'il n'est pas autorisé à utiliser son terminal (1) radiotéléphonique comme télécommande du dispositif (3),

8. Procédé selon une des revendications 1 à 6, **caractérisé en ce que** l'étape de transmission par un serveur central (5) au dispositif (3) d'une commande pour une opération déterminée consiste en l'envoi d'un message de commande d'exécution, par le réseau radiotéléphonique ou par le réseau filaire, pour commander au dispositif (3) d'exécuter l'opération et en la réception du message de commande d'exécution par un module de communication radiotéléphonique (32) du dispositif (3).

9. Procédé selon une des revendications 1 à 8, **caractérisé en ce que** le dispositif (3) exécute l'opération grâce à un module de commande (33).

10. Procédé selon la revendication 9, **caractérisé en ce que**, si le dispositif (3) propose un seul service, l'exécution de l'opération par le dispositif (3) consiste **en ce que** le dispositif (3) fournisse à l'utilisateur (2) ledit service.

11. Procédé selon la revendication 9, **caractérisé en ce que**, si le dispositif (3) propose plusieurs services, un numéro de pilotage différent étant associé à chaque service, l'exécution de l'opération par le dispositif (3) consiste **en ce que** le dispositif (3) fournisse à l'utilisateur (2) le service associé au numéro de pilotage composé par l'utilisateur (2).

12. Procédé selon la revendication 9, **caractérisé en ce que**, si le dispositif (3) propose plusieurs services, un numéro de pilotage unique étant associé au dispositif (3), l'exécution de l'opération par le dispositif (3) consiste **en ce que** le dispositif (3) débloque une deuxième Interface, tactile, du dispositif (3) pour que l'utilisateur sélectionne un service, et **en ce que** le dispositif (3) fournisse le service sélectionné par l'utilisateur (2).

13. Procédé selon une des revendications 1 à 12, **caractérisé en ce que**, si le dispositif (3) a fourni le service désiré à l'utilisateur (2), l'étape d'exécution de l'opération par le dispositif (3) est suivie d'une étape de mémorisation du service fourni par le dispositif (3) dans une mémoire (34) du dispositif (3), et d'une étape de facturation du service par l'opérateur (6) radiotéléphonique via un serveur central (5) et le dispositif (3).

14. Procédé selon la revendication 13, **caractérisé en ce que** l'étape de facturation consiste en l'envoi d'un massage d'exécution de l'opération réussie du dispositif (3), via son module de communication (32), vers un serveur central (5), le message d'exécution de l'opération réussie comprenant au moins un identifiant du dispositif (3), le service effectué, le prix du service et l'heure à laquelle le service a été fourni.

15. Procédé selon la revendication 14, **caractérisé en ce que** le message d'exécution de l'opération réussie est mémorisé dans la mémoire (53) d'un serveur central (5) et associé par le serveur central (5) au numéro d'identification du terminal (1) de l'utilisateur (2), le serveur central (5) envoyant alors à l'opérateur (6) un message de facturation du service à l'utilisateur (2), le message de facturation comprenant au moins le numéro d'identification du terminal de l'utilisateur (2) et le prix que ce dernier doit payer.

16. Procédé selon la revendication 15, **caractérisé en ce que** l'opérateur (6) mémorise le message de facturation dans une mémoire (61) du serveur de l'opérateur (6).

17. Procédé selon une des revendications 1 à 16, **caractérisé en ce que**, si le dispositif (3) n'a pas fourni le service désiré à l'utilisateur (2), le dispositif (3) utilise sa première interface (31) pour informer l'utilisateur (2) qu'une erreur est survenue, et envoie un message d'erreur à un serveur central (5), le message d'erreur comprenant au moins un identifiant du dispositif (3), le service qui était désiré, et l'heure à laquelle l'erreur est survenue.

18. Procédé selon la revendication 17, **caractérisé en ce qu'**un serveur central (5) mémorise le message d'erreur dans sa mémoire (53) et envoie un message d'information à l'utilisateur (2) par le réseau radiotéléphonique pour l'informer qu'une erreur est survenue.

## Patentansprüche

1. Verfahren, um einem Anwender (2) zu ermöglichen, ein Funktelephon-Endgerät (1) als Fernsteuerung einer automatischen Vorrichtung (3) zu verwenden, die einen oder mehrere Dienste erbringt, **dadurch gekennzeichnet, dass** es umfasst:
- einen Schritt, in dem der Anwender (2) wenigstens einen zentralen Server (5) über ein Funktelephonnetz anruft, indem der Anwender (2) mit Hilfe seines Endgerätes (1) eine Steuerungsnummer wählt,
- einen Schritt, in dem der Anruf durch den oder die zentralen Server (5) ohne Abnehmen empfangen wird, indem Identifizierungsmittel und ein Speicher (53) des zentralen Servers oder der zentralen Server (5) verwendet werden, um die Steuerungsnummer und die Identifizierungsnummer des Endgeräts (1) zu identifizieren bzw. zu speichern, gefolgt von einem Schritt der Beendigung der Kommunikation unter Verwendung von Auflegemitteln ohne Abnehmen, die dem zentralen Server bzw. den zentralen Servern (5) ermöglichen, aufzulegen, ohne abgenommen zu haben,
- einen Schritt, in dem die Vorrichtung (3) wenigstens anhand der Steuerungsnummer identifiziert wird,
- einen Schritt, in dem die Rechte des Anwenders (2) untersucht und verifiziert werden und dann, wenn der Anwender berechtigt ist, sein Endgerät (1) für die Fernsteuerung einer Vorrichtung (3) zu verwenden, einen Schritt, in dem durch den oder die zentralen Server (5) an die Vorrichtung (3) ein Befehl für eine bestimmte Operation übertragen wird, und einen Schritt, in dem die Operation durch die Vorrichtung (3) ausgeführt wird.

2. Verfahren nach Anspruch 1, **dadurch gekennzeichnet, dass** dem Anwender, der sein Funktelephon-Endgerät (1) als Fernsteuerung einer automatischen Vorrichtung (3) verwenden will, die Steuerungsnummer mündlich mittels einer ersten Schnittstelle (31) der Vorrichtung (3) mitgeteilt wird.

3. Verfahren nach Anspruch 1, **dadurch gekennzeichnet, dass** dem Anwender, der sein Funktelephon-Endgerät (1) als Fernsteuerung einer automatischen Vorrichtung (3) verwenden will, die Steuerungsnummer durch eine Nachricht, die auf eine erste Schnittstelle (31) der Vorrichtung (3) geschrieben ist, mitgeteilt wird.

4. Verfahren nach einem der Ansprüche 1 bis 3, **dadurch gekennzeichnet, dass** der Schritt des Identifizierens der Vorrichtung (3) darin besteht, durch einen zentralen Server (5) eine Korrespondenztabelle (52) zwischen den Steuerungsnummern und den Typen von Vorrichtungen (3) abzufragen, wobei jede Vorrichtung durch eine Steuerungsnummer eindeutig identifiziert wird, und den Typ der Vorrichtung (3) aus der Korrespondenztabelle (52) anhand der von dem zentralen Server (5) empfangenen Steuerungsnummer zu extrahieren.

5. Verfahren nach einem der Ansprüche 1 bis 3, **dadurch gekennzeichnet, dass** der Schritt des Identifizierens der Vorrichtung (3) aus einem Schritt der Abfrage des Operators (8) durch einen zentralen Server (5) besteht, um den geographischen Ort des Anwenders (2) zu erfahren, genauer eine abgedeckte Zone, die durch die terrestrische Basisstation oder die terrestrischen Basisstationen (4), in deren Nähe sich der Anwender (2) und die Vorrichtung (3) befinden, gefolgt von einem durch den zentralen Server (5) ausgeführten Schritt des Abfragens einer Korrespondenztabelle (52) zwischen den Steuerungsnummern, den Vorrichtungen (3) und dem geographischen Ort der Vorrichtungen (3), wobei jede Vorrichtung eindeutig durch eine Steuerungsnummer und einen geographischen Ort identifiziert wird, und des Extrahierens des Typs der Vorrichtung (3) aus der Korrespondenztabelle (52) anhand der durch den zentralen Server (5) empfangenen Steuerungsnummer.

6. Verfahren nach einem der Ansprüche 4 oder 5, **dadurch gekennzeichnet, dass** der Schritt des Untersuchens und Verifizierens der Rechte des Anwenders (2) darin besteht, durch einen zentralen Server (5) eine Liste von eingeschriebenen Anwendern (51) abzufragen, wobei diese Liste Identifizierungsnummern, insbesondere die Nummern von Anwendern (2), die berechtigt sind, ihr Funktelephon-Endgerät (1) als Fernsteuerung für eine oder mehrere bestimmte automatische Vorrichtungen (3) zu verwenden, enthält, und die Identifizierungsnummern und die Steuerungsnummern mit der Liste der eingeschriebenen Anwender zu vergleichen.

7. Verfahren nach Anspruch 6, **dadurch gekennzeichnet, dass** dann, wenn der Anwender nicht berechtigt ist, sein Funktelephon-Endgerät (1) als Fernsteuerung der Vorrichtung (3) zu verwenden, ein zentraler Server (5) eine Funktelephonverbindung mit dem Anwender (2) aufbaut und ihm mitteilt, dass er nicht berechtigt ist, sein Funktelephon-Endgerät (1) als Fernsteuerung der Vorrichtung (3) zu verwenden.

8. Verfahren nach einem der Ansprüche 1 bis 6, **dadurch gekennzeichnet, dass** der Schritt des Sendens eines Befehls für eine bestimmte Operation durch einen zentralen Server (5) zu der Vorrichtung (3) darin besteht, eine Ausführungsbefehlsnachricht über das Funktelephonnetz oder das Festnetz zu schicken, um der Vorrichtung (3) zu befehlen, die Operation auszuführen, und die Ausführungsbefehlsnachricht durch ein Funktelephon-Kommunikationsmodul (32) der Vorrichtung (3) zu empfangen.

9. Verfahren nach einem der Ansprüche 1 bis 8, **dadurch gekennzeichnet, dass** die Vorrichtung (3) die Operation mittels eines Steuermoduls (33) ausführt.

10. Verfahren nach Anspruch 9, **dadurch gekennzeichnet, dass** dann, wenn die Vorrichtung (3) einen einzigen Dienst erbringt, die Ausführung dieser Operation durch die Vorrichtung (3) darin besteht, dass die Vorrichtung (3) den Dienst zu dem Anwender (2) liefert.

11. Verfahren nach Anspruch 9, **dadurch gekennzeichnet, dass** dann, wenn die Vorrichtung (3) mehrere Dienste erbringt, wovon jedem eine unterschiedliche Steuerungsnummer zugeordnet ist, die Ausführung der Operation durch die Vorrichtung (3) darin besteht, dass die Vorrichtung (3) den Dienst, der der durch den Anwender (2) gewählten Steuerungsnummer zugeordnet ist, zu dem Anwender (2) liefert.

12. Verfahren nach Anspruch 9, **dadurch gekennzeichnet, dass** dann, wenn die Vorrichtung (3) mehrere Dienste erbringt und der Vorrichtung (3) eine einzige Steuerungsnummer zugeordnet ist, die Ausführung der Operation durch die Vorrichtung (3) darin besteht, dass die Vorrichtung (3) eine zweite taktile Schnittstelle der Vorrichtung (3) freigibt, damit der Anwender einen Dienst auswählt, und dass die Vorrichtung (3) den durch den Anwender (2) ausgewählten Dienst erbringt.

13. Verfahren nach einem der Ansprüche 1 bis 12, **dadurch gekennzeichnet, dass** dann, wenn die Vorrichtung (3) den gewünschten Dienst zu dem Anwender (2) geliefert hat, dem Schritt des Ausführens der Operation durch die Vorrichtung (3) ein Schritt des Speicherns des durch die Vorrichtung (3) erbrachten Dienstes in einem Speicher (34) der Vorrichtung (3) und ein Schritt der Fakturierung des Dienstes durch den Funktelephon-Operator (6) über einen zentralen Server (5) und die Vorrichtung (3) folgen.

14. Verfahren nach Anspruch 13, **dadurch gekennzeichnet, dass** der Fakturierungsschritt darin besteht, eine Nachricht über die erfolgreiche Ausführung der Operation der Vorrichtung (3) über ihr Kommunikationsmodul (32) zu einem zentralen Server (5) zu schicken, wobei die Nachricht über die erfolgreiche Ausführung der Operation wenigstens eine Kennung der Vorrichtung (3), den ausgeführten Dienst, den Preis des Dienstes und die Uhrzeit, zu der der Dienst erbracht worden ist, umfasst.

15. Verfahren nach Anspruch 14, **dadurch gekennzeichnet, dass** die Nachricht über die erfolgreiche Ausführung des Dienstes in dem Speicher (53) eines zentralen Servers (5) gespeichert und durch den zentralen Server (5) der Identifizierungsnummer des Endgeräts (1) des Anwenders (2) zugeordnet wird, wobei der zentrale Server (5) dann dem Operator (8) eine Nachricht über die Fakturierung des Dienstes für den Anwender (2) schickt, wobei die Fakturierungsnachricht wenigstens die Identifizierungsnummer des Endgeräts des Anwenders (2) und den Preis, den letzterer zahlen soll, umfasst.

16. Verfahren nach Anspruch 15, **dadurch gekennzeichnet, dass** der Operator (8) die Fakturierungsnachricht in einem Speicher (61) des Servers des Operators (6) speichert.

17. Verfahren nach einem der Ansprüche 1 bis 16, **dadurch gekennzeichnet, dass** die Vorrichtung (3) dann, wenn sie den gewünschten Dienst nicht zu dem Anwender (2) geliefert hat, ihre erste Schnittstelle (31) verwendet, um den Anwender (2) zu informieren, dass ein Fehler aufgetreten ist, und eine Fehlernachricht eines zentralen Servers (5) schickt, wobei die Fehlernachricht wenigstens eine Kennung der Vorrichtung (3), den gewünschten Dienst und die Uhrzeit, zu der der Fehler aufgetreten ist, umfasst.

18. Verfahren nach Anspruch 17, **dadurch gekennzeichnet, dass** ein zentraler Server (5) die Fehlernachricht in seinem Speicher (53) speichert und eine Informationsnachricht über das Funktelephonnetz zu dem Anwender (2) schickt, um ihn zu informieren, dass ein Fehler aufgetreten ist.

## Claims

1. Method for allowing a user (2) to use a radiotelephone terminal (1) as a remote control for an automatic device (3) providing one or more services, **characterised in that** it comprises:
- a step of the user (2) calling at least one central server (5), via the radiotelephone network, the user (2) dialling a control number using his terminal (1),
- a step of receiving the call without going off-hook, via the central server(s) (5), using identification means and a memory (53) of the central server(s) (5) for respectively identifying and storing the control number and the identification number of the terminal (1), followed by a step of ending the call using means for hanging up without going off-hook allowing the central server(s) (5) to hang up without having gone off-hook,
- a step of identifying the device (3) at least from the control number,
- a step of studying and checking the user rights (2), then, if the user is authorised to use his terminal (1) to operate a device (3) by remote control, a step of transmitting, via the central server(s) (5) to the device (3), a command for a given operation, and a step of executing the operation by the device (3).

2. Method according to Claim 1, **characterised in that** the control number is notified to the user wanting to use his radiotelephone terminal (1) as a remote control for an automatic device (3), orally via a first interface (31) of the device (3).

3. Method according to Claim 1, **characterised in that** the control number is notified to the user wanting to use his radiotelephone terminal (1) as a remote control for an automatic device (3), via a written message on a first interface (31) of the device (3).

4. Method according to one of Claims 1 to 3, **characterised in that** the step of identifying the device (3) consists of the consultation, by a central server (5), of a correlation map (52) between the control numbers and the types of device (3), each device being identified univalently by a control number, and extraction of the type of device (3) from the correlation map (52) on the basis of the control number received by the central server (5).

5. Method according to one of Claims 1 to 3, **characterised in that** the step of identifying the device (3) consists of a step of interrogation of the operator (6) by a central server (5) in order to find out the geographical location of the user (2), namely a covered zone defined by the base land station(s) (4) near which the user (2) and the device (3) are located, followed by a step of consultation by the central server (5) of a correlation map (52) between the control numbers, the devices (3) and the geographical location of the devices (3), each device being identified univalently by a control number and a geographical location, and of extraction of the type of device (3) from the correlation map (52) on the basis of the control number received by the central server (5).

6. Method according to one of Claims 4 or 5, **characterised in that** the step of studying and checking the user rights (2) consists of the consultation, by a central server (5), of a list of registered users (51), this list comprising the identification numbers, in particular the numbers of the users (2) authorised to use their radiotelephone terminals (1) as remote controls for one or more given automatic devices (3), and in comparing the control and identification numbers received with the list of registered users.

7. Method according to Claim 6, **characterised in that**, if the user is not authorised to use his radiotelephone terminal (1) as a remote control device (3), a central server (5) establishes a radiotelephone communication with the user (2) and notifies him that he is not authorised to use his radiotelephone terminal (1) as a remote control device (3).

8. Method according to one of Claims 1 to 6, **characterised in that** the step of transmission by a central server (5) to the device (3) of a command for a given operation consists in an execution command message being sent by the radiotelephone network or the fixed telephone network, to command the device (3) to execute the operation and in the execution command message being received by a radiotelephone communication module (32) of the device (3).

9. Method according to one of Claims 1 to 8, **characterised in that** the device (3) executes the operation thanks to a control module (33).

10. Method according to Claim 9, **characterised in that**, if the device (3) proposes a single service, the execution of the operation by the device (3) consists in the device (3) providing said service to the user (2).

11. Method according to Claim 9, **characterised in that**, if the device (3) proposes several services, a different control number being associated with each service, the execution of the operation by the device (3) consists in the device (3) providing the user (2) with the service associated with the control number dialled by the user (2).

12. Method according to Claim 9, **characterised in that**, if the device (3) proposes several services, a unique control number being associated with the device (3), the execution of the operation by the device (3) consists **in that** the device (3) unlocks a second, tactile, interface of the device (3) so that the user selects a service, and **in that** the device (3) provides the service selected by the user (2).

13. Method according to one of Claims 1 to 12, **characterised in that**, if the device (3) has provided the desired service to the user (2), the step of execution of the operation by the device (3) is followed by a step of storing the service provided by the device (3) in a memory (34) of the device (3), and by a step of invoicing of the service by the radiotelephone operator (6) via a central server (5) and the device (3).

14. Method according to Claim 13, **characterised in that** the invoicing step consists of the sending of a message of successful execution of the operation of the device (3), via its communication module (32), to a central server (5), the message of successful execution of the operation comprising at least one identifier of the device (3), the service carried out, the price of the service and the time when the service was provided.

15. Method according to Claim 14, **characterised in that** the message of successful execution is stored in the memory (53) of a central server (5) and associated by the central server (5) with the identification number of the terminal (1) of the user (2), the central server (5) then sending the operator (6) a message of invoicing of the service to the user (2), the invoicing message comprising at least the identification number of the terminal of the user (2) and the price that the latter has to pay.

16. Method according to Claim 15, **characterised in that** the operator (6) stores the invoicing message in a memory (61) of the server of the operator (6).

17. Method according to one of Claims 1 to 16, **characterised in that**, if the device (3) has not provided the desired service to the user (2), the device (3) uses its first interface (31) to inform the user (2) that an error has occurred, and sends an error message to a central server (5), the error message comprising at least one identifier of the device (3), the service that was desired and the time at which the error occurred.

18. Method according to Claim 17, **characterised in that** a central server (5) stores the error message in its memory (53) and sends an information message to the user (2) via the radiotelephone network to inform him that an error has occurred.
